# EUROPÄISCHE PATENTSCHRIFT

(11) **EP 0 845 488 B1**
(45) Veröffentlichungstag und Bekanntmachung des Hinweises auf die Patenterteilung: **13.08.2003**
(21) Anmeldenummer: 97120257.7
(22) Anmeldetag: 19.11.1997
(51) Int. Cl.: C08G 77/14, C08G 77/38, C09D 183/06

(54) **Mit Acrylatgruppen modifizierte Organosiloxanylderivate von Alkandiolmonovinylethern, Verfahren zu deren Herstellung und deren Verwendung als strahlenhärtbare Bindemittel**
Acrylate groups-modified organosiloxanyl derivatives of alkanediolmonovinyl ethers, process for their manufacture and their use as radiation-curable binders
Dérivées organosiloxanyliques d'éthers vinyliques d'alkanediols modifiées avec des groupes d'acrylate, leur procédé de fabrication et leur utilisation comme liants durcissables par radiation

(30) Priorität: 02.12.1996 DE 19649844
(43) Veröffentlichungstag der Anmeldung: 03.06.1998
(73) Patentinhaber: Goldschmidt AG, 45127 Essen (DE)
(72) Erfinder: Ebbrecht, Thomas, Dr., 58455 Witten (DE); Feldmann-Krane, Georg, Dr., 45472 Mülheim (DE); Silber, Stefan, Dr., 47804 Krefeld (DE); Stadtmüller, Stefan, Dr., 45141 Essen (DE)

(56) Entgegenhaltungen:
- EP-A- 0 446 938
- EP-A- 0 625 533
- EP-A- 0 625 535
- EP-A- 0 644 222

## Beschreibung

Gegenstand der Erfindung sind neuartige Organosiliciumverbindungen, die end- und/oder seitenständig mindestens einen Si-Cgebundenen organischen Rest der allgemeinen Formel

≡Si―(CH₂)₂O(CR₂)ₙOC(O)CR=CHR

aufweisen, ein Verfahren zur Herstellung dieser organomodifizierten Derivate sowie deren Verwendung als härtbare Beschichtungsmittel mit abhäsiven Eigenschaften. Dabei sind die Acrylatfunktionen enthaltenden organischen Gruppen mit dem Siloxanrücken über Si-C-Bindungen verknüpft.

Polysiloxane, die Acrylatsäureestergruppen (Acrylatgruppen) enthalten, haben sich als unter energiereicher Strahlung härtbare Bindemittel, z. B. für Druckfarben und zur Herstellung von Lackbindemitteln oder für Beschichtungsmittel für Kunstoff-, Papier, Holz- und Metalloberflächen, bewährt. Die Härtung erfolgt insbesondere durch UV-Strahlung (nach Zusatz bekannter Photoinitiatoren, wie z. B. Benzophenon und seiner Derivate) oder durch Elektronenstrahlung.

Die Darstellung von Organosiloxanen mit acrylatmodifizierten organischen Gruppen, die über Si-O- und/oder über Si-C-Bindungen an die Siloxaneinheit gebunden sind, ist in zahlreichen Patentschriften beschrieben. Stellvertretend werden zum Stand der Technik die folgenden Patent- und Offenlegungsschriften genannt.

Organopolisiloxane, bei denen die acrylathaltigen organischen Gruppen über eine SiOC-Bindung mit dem Polysiloxangerüst verbunden sind, können nach einem Verfahren der DE-C-27 47 233 durch Umsetzung von -COH-Gruppen aufweisenden (Meth)acrylsäureestern mit Organopolysiloxanen, die SiX-Gruppen (X = Alkoxy-, Hydroxy- oder Chlorrest) aufweisen, dadurch hergestellt werden, daß man als Organopolysiloxane solche der Formel 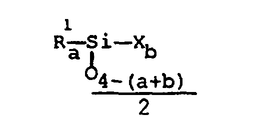
- R¹ =: Alkylgruppe mit 1 bis 4 C-Atomen und/oder eine Phenylgruppe;
- X =: Chlor oder eine OR²-Gruppe;
- R² =: Alkylgruppe mit 1 bis 4 C-Atomen und/oder Wasserstoff;
- a =: 1,0 bis 2,0;
- b =: 0,02 bis 1,6;
a+b ≤ 2, 66;
wobei das Siloxanmolekül 3 bis 100 Si-Atome aufweist und als (Meth)Acrylsäureester Pentaerythrittri(meth)acrylat verwendet, wobei, bezogen auf COH- und SiX-Gruppen, 0,05 Mol bis äquimolare Mengen des Pentaerythritesters eingesetzt werden.

In einer Modifizierung dieses Verfahrens verfährt man entsprechend der DE-C-29 48 708 in der Weise, daß man Organopolysiloxane der Formel 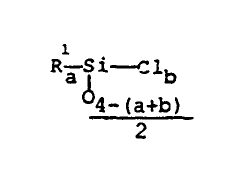 (R¹ = Alkyl mit 1 bis 4 Kohlenstoffatomen, Vinyl und/oder Phenyl, mit der Maßgabe, daß mindestens 90 Mol-% der Gruppen R¹ Methyl sind; a = Wert von 1,8 bis 2,2; b = Wert von 0,004 bis 0,5) zunächst mit, bezogen auf SiCl-Gruppen, mindestens 2molaren Mengen eines Dialkylamins, dessen Alkylgruppen jeweils 3 bis 5 C-Atome aufweisen, und wobei die dem Stickstoff benachbarten C-Atome höchstens jeweils ein Wasserstoffatom tragen, umsetzt und das Umsetzungsprodukt mit mindestens äquimolaren Mengen Pentaerythrittriacrylat oder Pentraerythrittrimethacrylat reagieren läßt und dann das Verfahrensprodukt von in diesem suspendierten festen Bestandteilen in an sich bekannter Weise abtrennt.

Es ist dem Fachmann geläufig, daß die acrylatmodifizierten Organopolysiloxane, bei denen die organischen Gruppen, welche den oder die Acrylatreste tragen, über SiC-Bindungen mit dem Siloxangerüst verbunden sind, hinsichtlich der Hydrolysestabilität den Verbindungen überlegen sind, bei denen die Verknüpfung über eine SiOC-Bindung erfolgt ist.

Organopolysiloxane, bei denen die acrylesterhaltigen organischen Gruppen über SiC-Bindungen mit dem Polysiloxangerüst verbunden sind, können z.B. dadurch hergestellt werden, daß man an ein Wasserstoffsiloxan Allylglycidether oder ein anderes geeignetes Epoxid mit einer olefinischen Doppelbindung addiert und nach der Anlagerung das Epoxid mit Acrylsäure unter Öffnung des Epoxidringes verestert. Diese Verfahrensweise ist in der DE-C-38 20 294 beschrieben.

Eine weitere Möglichkeit der Herstellung acrylatmodifizierter Polysiloxane mit SiC-Verknüpfung der modifizierenden Gruppe(n) besteht darin, daß man an ein Wasserstoffsiloxan einen Alkohol mit einer olefinischen Doppelbindung, z. B. Allylalkohol, in Gegenwart eines Platinkatalysators, addiert und dann die OH-Gruppe dieses Alkohols mit Acrylsäure oder einem Gemisch von Acrylsäure und anderen gegebenenfalls gesättigten Säuren umsetzt. Diese Verfahrensweise ist z. B. in der DE-C-38 10 140 beschrieben.

Bei diesen Umsetzungen von Wasserstoffsiloxanen mit 1-Alkenylepoxiden oder 1-Alkenylalkoholen kommt es jedoch als Nebenreaktion zur ungewünschten Umlagerung zum für Hydrosilylierungen unreaktiven 2-Alkenylepoxid bzw. 2-Alkenylalkohol. Daher muß bei diesen Hydrosilylierungsreaktionen üblicherweise ein hoher Überschuß der Alkenkomponente eingesetzt werden, der nach Reaktionsende im Produkt verbleibt oder in einem weiteren Arbeitsschritt z. B. durch Destillation oder Extraktion wieder entfernt werden muß, wobei im Einzelfall solche Überschüsse im Bereich bis zu 50 Mol-% liegen können. Allerdings ist die Entfernung derartiger Überschüsse aus dem Produkt in Abhängigkeit von der eingesetzten 1-Alkenylkomponente oft nicht oder nur unter erheblichem Aufwand möglich.

Überraschenderweise wurde bei der Hydrosilylierungsreaktion mit Alkandiolmonovinylethern festgestellt, daß bei diesen Reaktionen kein Überschuß der olefinischen Komponente notwendig ist, sondern diese äquimolar zur SiH-Komponente eingesetzt werden kann, da die sonst bei Hydrosilylierungsreaktionen auftretende Umlagerung der Doppelbindung (z. B. bei Allylgruppen) im Falle einer solchen Vinyldoppelbindung ausgeschlossen ist.

Gegenstand der vorliegenden Erfindung sind deshalb Organosiloxanylacrylate, bei denen die (Meth)acrylateinheiten durch Veresterungsreaktion von (Meth)acrylsäure mit einem Si-Cverknüpften Ethylhydroxyalkylethersiloxan, seinerseits hergestellt durch Hydrosilylierungsreaktion eines end- und/oder seitenständigen Wasserstoffsiloxans mit einem Alkandiolmonovinylether, eingeführt werden, die Herstellung derartiger Verbindungen und deren Verwendung als härtbare Beschichtungsmittel mit abhäsiven Eigenschaften.

Derartig hergestellte abhäsive Beschichtungsmassen zeichnen sich darüber hinaus durch schnelle Vernetzung und durch ein vorbestimmbares, stabiles Trennverhalten aus, welches sich auch nach längerer Lagerzeit nur unwesentlich verändert.

Die erfindungsgemäßen Verbindungen entsprechen der allgemeinen Formel 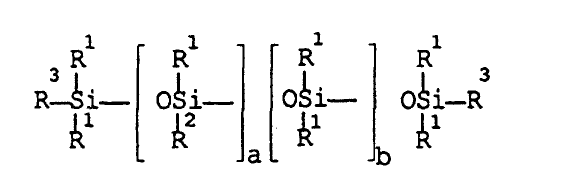 wobei
- R^{1 =}: gleiche oder verschiedene aliphatische oder aromatische Kohlenwasserstoffreste sind,
- R² =: CH₂CH₂O(CR⁴R⁵)ₓOC(O)CR⁶=CHR⁷ ist, wobei
R⁴, R⁵, R⁶ und R⁷
gleiche oder verschiedene Reste sein können und jeweils einen H- oder Alkylrest, verzweigt oder unverzweigt, mit bis zu insgesamt 6 C-Atomen bedeuten und x einen Wert von 3 bis 11 hat, wobei -(CR⁴R⁵)- auch ein ringförmiger aliphatischer oder aromatischer Rest sein kann,
- R³ =: R² oder R¹ ist,
- a =: 0 bis 50 und
- b =: 0 bis 500 ist,
wobei jedoch mindestens ein Rest R² end- und/oder seitenständig gebunden ist.

Bevorzugt sind Verbindungen in denen R¹ = CH₃, R⁴, R⁵, R⁶, R⁷ = H oder CH₃, a = 0 bis 30, b = 0 bis 400 bedeutet, besonders bevorzugt sind solche mit R¹ = CH₃, R⁴, R⁵, R⁶, R⁷ = H, a = 0 bis 20, b = 0 bis 250.

Es ist dem Fachmann geläufig, daß die Verbindungen in Form eines Gemisches mit einer im wesentlichen durch statistische Gesetze geregelten Verteilung vorliegen. Die Werte für die Indices a und b stellen deshalb Mittelwerte dar.

Die erfindungsgemäßen Organosiloxanylderivate sind zugänglich in einem zweistufigen Syntheseweg. Dabei werden in der ersten Stufe durch übergangsmetallkatalysierte Hydrosilylierungsreaktionen von Organosiloxanylderivaten an Alkandiolmonovinylether die jeweiligen Hydroxysiloxane hergestellt, die im zweiten Schritt mit Acrylsäure oder Acrylsäurederivaten verestert werden.

Sie können in einfacher Weise hergestellt werden, indem man wasserstoffunktionelle Siloxane der allgemeinen Formel 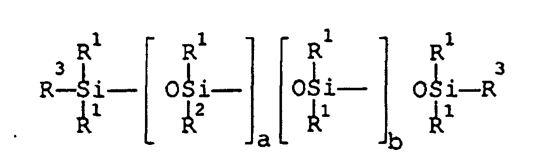 wobei
- R¹ =: gleiche oder verschiedene aliphatische oder aromatische Kohlenwasserstoffreste sind,
- R² =: H ist,
- R³ =: R² oder R¹ ist,
und die übrigen Indices die obengenannte Bedeutung haben,
an Alkandiolmonovinylether der allgemeinen Formel 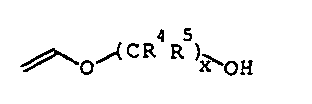 wobei R⁴ und R⁵ gleiche oder verschiedene Reste sein können und jeweils einen H- oder Alkylrest, verzweigt oder unverzweigt, mit bis zu insgesamt 6 C-Atomen bedeuten und x einen Wert von 3 bis 11 hat, wobei -(CR⁴R⁵)- auch ein ringförmiger aliphatischer oder aromatischer Rest sein kann,
in Gegenwart eines an sich bekannten Hydrosilylierungskatalysators (z. B. Platin- oder Rhodiumkatalysator) anlagert und in einer nachfolgenden Reaktionsstufe mit Acrylsäure oder Acrylsäurederivaten verestert.

Bevorzugte Beispiele für die Reste R⁴ und R⁵ sind Wasserstoff und Alkylreste von C1 bis C8. Insbesondere bevorzugt ist R⁴ = R⁵ = Wasserstoff. x ist vorzugsweise 2 bis 6. Insbesondere bevorzugt ist x = 4.

Beispiele erfindungsgemäßer Substanzen sind:

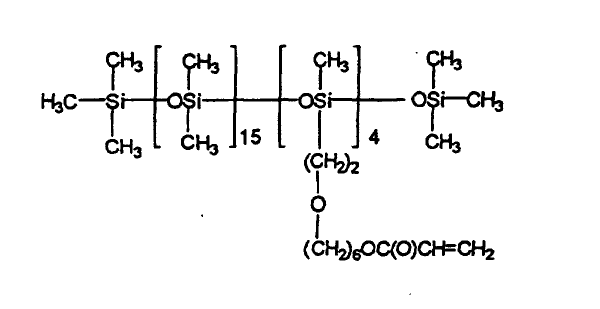

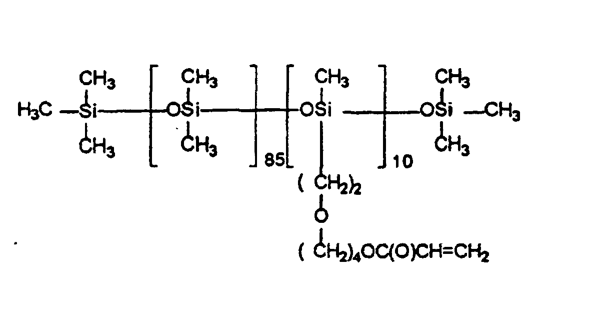

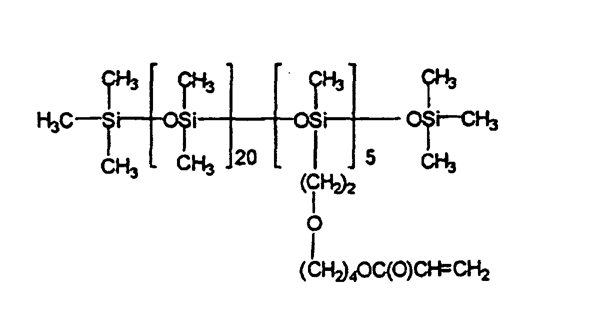

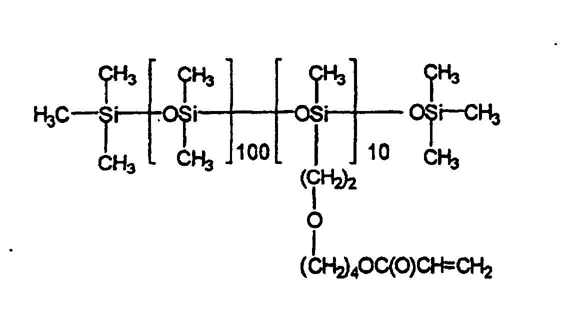

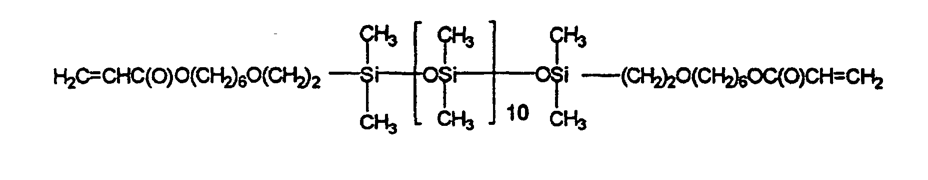

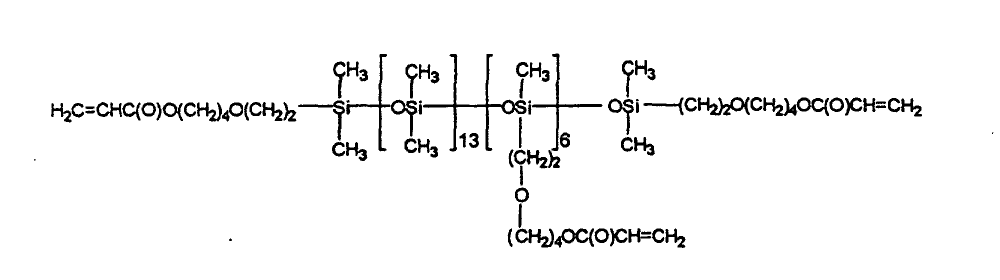

Die erfindungsgemäßen Verbindungen können als strahlenhärtende Lacke oder Beschichtungsmassen oder als Additive in solchen Systemen eingesetzt werden. Sie können in üblicher Weise mit Härtungsinitiatoren, Füllstoffen, Pigmenten, anderen an sich bekannten Acrylatsystemen und weiteren üblichen Zusatzstoffen compoundiert werden. Die erfindungsgemäßen Verbindungen können dreidimensional durch freie Radikale vernetzt werden und härten thermisch unter Zusatz von z. B. Peroxiden oder unter Einfluß energiereicher Strahlung, wie UV- oder Elektronenstrahlung, innerhalb kürzester Zeit zu mechanisch und chemisch widerstandsfähigen Schichten aus, die bei geeigneter Zusammensetzung der erfindungsgemäßen Verbindungen vorbestimmbare abhäsive Eigenschaften aufweisen. Wird als Strahlungsquelle UV-Licht verwendet, erfolgt die Vernetzung vorzugsweise in Anwesenheit von Photoinitiatoren und/oder Photosensibilisatoren, wie z. B. Benzophenon und dessen Derivate oder Benzoin und entsprechende substituierte Benzoinderivate.

Photoinitiatoren und/oder Photosensibilisatoren werden in den die erfindungsgemäßen Organopolysiloxane enthaltenen Zusammensetzungen vorzugsweise in Mengen von 0,01 bis 10 Gew.-%, insbesondere von 0,1 bis 5 Gew.-%, jeweils bezogen auf das Gewicht der acrylatfunktionellen Organopolysiloxane, verwendet.

Nachfolgende Beispiele sollen zur Verdeutlichung der Erfindung dienen, sie stellen jedoch keinerlei Einschränkung dar.

### Beispiel 1

### Anlagerung von 1,4-Butandiolmonovinylether an ein seiten- und endständig Si-H-funktionelles Siloxan

40 g 1,4-Butandiolmonovinylether werden bei 100 °C in einem 500-ml-Vierhalskolben mit Rührer, Tropftrichter und Thermometer unter Inertgas vorgelegt und nach Zugabe von 10 ppm Platinkatalysator und 0,05 Gew.-% n-Butylethanolamin mit insgesamt 322 g Si-H-funktionellem Siloxan der allgemeinen Formel Me₂HSiO(SiMe₂O)₈₃(SiHMeO)₅SiMe₂H reagieren lassen.

Zur Acrylierung von 685 g dieses end- und seitenständig funktionalisierten Hydroxyalkylsiloxans wird mit 47 g Acrylsäure nach Zugabe von 100 ppm Methylhydrochinon und 0,3 % Trifluormethansulfonsäure in 400 ml Cyclohexan reagieren lassen. Das Reaktionsprodukt wird neutralisiert, filtriert und das Lösungsmittel durch Destillation entfernt.

Gemäß ²⁹Si-NMR- und ¹³C-NMR-spektroskopischer Ergebnisse besitzt das Endprodukt nachfolgende Struktur

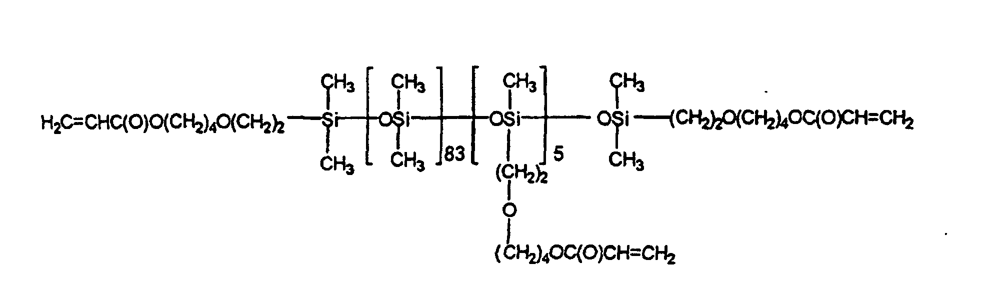

### Beispiel 2

In analoger Weise wie in Beispiel 1 beschrieben werden 100 g eines endständig Si-H-funktionalisierten Polydimethylsiloxans der mittleren Kettenlänge N = 10 und der allgemeinen Formel Me₂HSiO(SiMe₂O)₈SiMe₂H mit 32,5 g 1,4-Butandiolmonovinylether unter Verwendung von 10 ppm Platinkatalysator und 0,05 Gew.-% n-Butylethanolamin umgesetzt. Nach 5 Std. Rühren bei 100 °C liegt der Umsatz > 99,5 %.

Zur Veresterung des Hydroxyalkylsiloxans mit Acrylsäure werden analog wie in Beispiel 1 beschrieben 250 g des endständigen Hydroxyalkylsiloxans mit 38 g Acrylsäure in 180 ml Cyclohexan unter Zusatz von 100 ppm Methylhydrochinon und 0,3 % Trifluormethansulfonsäure umgesetzt. Die Aufarbeitung des Reaktionsproduktes erfolgt durch Neutralisation mit einer 2 %igen Natriumcarbonatlösung, Filtration und Destillation.

Gemäß ²⁹Si-NMR- und ¹³C-NMR-spektroskopischer Ergebnisse besitzt das Endprodukt nachfolgende Struktur

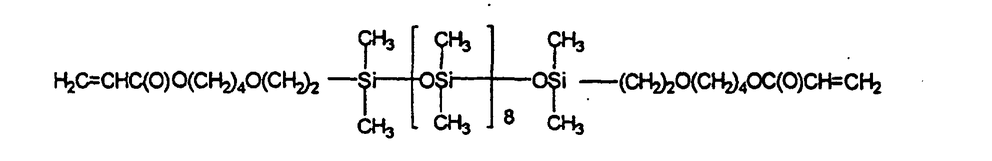

### Beispiel 3

### Anlagerung von 1,4-Butandiolmonovinylether an ein seitenständig Si-H-funktionelles Siloxan

37 g 1,4-Butandiolmonovinylether werden in einem 500-ml-Vierhalskolben, ausgestattet mit Intensivkühler, Thermometer und Tropftrichter, in inerter Atmosphäre auf 100 °C aufgeheizt. Bei Erreichen der Temperatur werden 10 ppm Platinkatalysator und 0,05 Gew.-% n-Butylethanolamin zugegeben. Innerhalb von 20 Min. werden 224,5 g seitenständig Si-H-funktionalisiertes Polydimethylsiloxan der mittleren Kettenlänge N = 58 und der allgemeinen Formel Me₃SiO(SiMe₂O)₅₀(SiHMeO)₆SiMe₃ zugetropft, so daß die Reaktionstemperatur 110 °C nicht übersteigt. Das Reaktionsgemisch wird solange weitergerührt bis der Umsatz > 99,5 % liegt (ca. 5 Std.). Das Produkt wird nach Abkühlen auf Raumtemperatur filtriert.

### Acrylierung des Hydroxyalkylsiloxans

In einem 1000-ml-Vierhalskolben mit Rührer, Tropftrichter und Thermometer werden unter Stickstoffatmosphäre 300 g des seitenständigen Hydroxyalkylsiloxans zusammen mit 180 ml Cyclohexan und 100 ppm Methylhydrochinon auf 65 °C aufgeheizt. Bei dieser Temperatur werden 0,3 % Trifluormethansulfonsäure zugegeben und anschließend insgesamt 26,3 g Acrylsäure zugetropft. Das Kondensationswasser wird mittels eines Wasserabscheiders abgetrennt. Die Reaktionsdauer beträgt ca. 3 Stunden. Anschließend wird das Reaktionsgemisch mit einer 2 %igen Natriumcarbonatlösung neutralisiert, filtriert und destilliert.

Gemäß ²⁹Si-NMR- und ¹³C-NMR-spektroskopischer Ergebnisse besitzt das Endprodukt nachfolgende Struktur

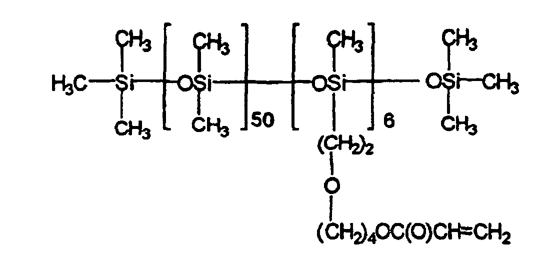

### Anwendungstechnische Überprüfung

Zur Überprüfung der anwendungstechnischen Eigenschaften der erfindungsgemäß zu verwendenden Substanzen werden die Produkte der Beispiele auf flächige Träger (orientierte Polypropylenfolie) aufgetragen und durch Einwirkung von 2 MRad Elektronenstrahlen (ESH) gehärtet bzw. nach Zugabe des Photoinitiators (Darocur® 1173, Ciba Geigy) durch Einwirkung von UV-Licht mit 120 W/cm (UVH) mit Bahngeschwindigkeiten von 20 m/min gehärtet. Die Auftragsmenge beträgt in jedem Fall ca. 0,8 g/m².

### Trennwert

Für die Ermittlung der Trennwerte werden verschiedene, 25 mm breite Klebebänder der Firma Beiersdorf verwendet, und zwar ein mit Acrylatkleber beschichtetes Klebeband, das im Handel unter der Bezeichnung TESA® 7475 erhältlich ist, sowie mit Kautschukkleber beschichtete Klebebänder, welche im Handel unter den Bezeichnungen TESA® 4154 und TESA® 7476 erhältlich sind.

Zur Messung der Abhäsivität werden diese Klebebänder auf den Untergrund aufgewalzt und anschließend bei 40 °C unter einem Gewicht von 70 g/cm² gelagert. Nach 24 Stunden wird die Kraft gemessen, die benötigt wird, um das jeweilige Klebeband mit einer Geschwindigkeit von 30 cm/min unter einem Schälwinkel von 180° vom Untergrund abzuziehen. Diese Kraft wird als Trennwert bezeichnet. Die allgemeine Testprozedur entspricht im wesentlichen der FINAT Testmethode Nr. 10. Zur Überprüfung des Alterungsverhaltens wird die Lagerzeit auf 7 und 14 Tage unter den oben beschriebenen Bedingungen verlängert.

### Loop-Test

Der Loop-Test dient zur schnellen Ermittlung des Härtungsgrades einer Trennbeschichtung. Hierzu wird ein etwa 20 cm langer Streifen des Klebebandes TESA® 4154 der Firma Beiersdorf dreimal auf den Untergrund aufgewalzt und sofort wieder von Hand abgezogen. Dann wird durch Zusammenlegen der Enden des Klebebandes eine Schlaufe gebildet, so daß die Klebeflächen beider Enden auf etwa einem Zentimeter Strecke Kontakt haben. Dann werden die Enden wieder von Hand auseinandergezogen, wobei die Kontaktfläche gleichmäßig zur Mitte des Klebebandes wandern sollte. Im Falle einer Kontamination mit schlecht ausgehärtetem Trennmaterial ist die Klebkraft des Klebebandes nicht mehr ausreichend, um die Kontaktfläche beim Auseinanderziehen der Enden zusammenzuhalten. In diesem Falle gilt der Test als nicht bestanden.

### Restklebkraft

Die Bestimmung der Restklebkraft erfolgt weitestgehend gemäß der FINAT Testvorschrift Nr. 11. Hierzu wird das Klebeband TESA® 7475 der Firma Beiersdorf auf den Untergrund gewalzt und anschließend bei 40 °C unter einem Gewicht von 70 g/m² gelagert. Nach 24 Stunden wird das Klebeband vom Trennsubstrat getrennt und auf einen definierten Untergrund (Stahlplatte, Glasplatte, Folie) aufgewalzt. Nach einer Minute wird die Kraft gemessen, die benötigt wird, um das Klebeband mit einer Geschwindigkeit von 30 cm/min unter einem Schälwinkel von 180° vom Untergrund abzuziehen. Der so gemessene Wert wird durch den Wert geteilt, den ein unbehandeltes Klebeband unter ansonsten gleichen Testbedingungen ergibt. Das Ergebnis wird als Restklebkraft bezeichnet und in der Regel in Prozent angegeben.

**Tabelle 1:**

| Anwendungstechnische Überprüfung der Substanzen aus den Beispielen 1 bis 3 | | | | | | | |
|---|---|---|---|---|---|---|---|
| Beispiel | Härtung | Darocur® 1173 | Loop Test | Restklebkraft % | Trennwert TESA® 7475 N/2,5 cm | Trennwert TESA® 7476 N/2,5 cm | Trennwert TESA® 4154 N/2,5 cm |
| 1 | UVH | 3% | i.O. | 91 | 0,1 | 0,4 | 0,1 |
| 2 | ESH | - | i.O. | 93 | 1,0 | 3,2 | 1,3 |
| 3 | UVH | 2% | i.O. | 98 | 0,1 | 0,6 | 0,1 |

**Tabelle 2:**

| Überprüfung der Trennwertstabilität mit TESA® 7475 nach 1, 7 und 14 Tagen Lagerung | | | | | |
|---|---|---|---|---|---|
| Beispiel | Härtung | Darocur® 1173 | Trennwert TESA® 7475 1 Tag N/2,5 cm | Trennwert TESA® 7475 7 Tage N/2,5 cm | Trennwert TESA® 7475 14 Tage N/2,5 cm |
| 1 | UVH | 3% | 0,1 | 0,1 | 0,1 |
| 2 | ESH | - | 1,0 | 1,2 | 1,3 |
| 3 | UVH | 2% | 0,1 | 0,1 | 0,1 |

## Patentansprüche

1. Organopolysiloxane der allgemeinen Formel 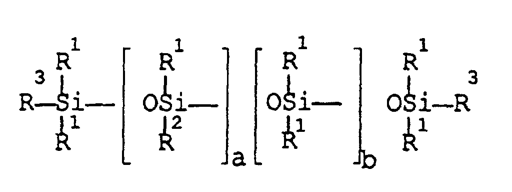 wobei
R¹ = gleiche oder verschiedene aliphatische oder aromatische Kohlenwasserstoffreste sind,
R² = CH₂CH₂O(CR⁴R⁵)ₓOC(O)CR⁶=CHR⁷ ist, wobei
R⁴, R⁵, R⁶ und R⁷
gleiche oder verschiedene Reste sein können und jeweils einen H- oder Alkylrest, verzweigt oder unverzweigt, mit bis zu insgesamt 6 C-Atomen bedeuten und x einen Wert von 3 bis 11 hat, wobei -(CR⁴R⁵)- auch ein ringförmiger aliphatischer oder aromatischer Rest sein kann,
R³ = R² oder R¹ ist,
a = 0 bis 50 und
b = 0 bis 500 ist,
wobei jedoch mindestens ein Rest R² end- und/oder seitenständig gebunden ist.

2. Organopolysiloxane gemäß Anspruch 1, wobei a = 0 bis 30 ist.

3. Organopolysiloxane gemäß Anspruch 1, wobei b = 0 bis 400 ist.

4. Organopolysiloxane gemäß Anspruch 1, wobei b = 0 bis 250 ist.

5. Organopolysiloxane gemäß Anspruch 1, wobei R¹ ein Methylrest ist.

6. Organopolysiloxane gemäß Anspruch 1, wobei R⁴ = R⁵ = R⁶ = R⁷ = Wasserstoff ist.

7. Organopolysiloxane gemäß Anspruch 1, wobei x = 3 bis 6 ist.

8. Organopolysiloxane gemäß Anspruch 1, wobei x = 4 ist.

9. Verfahren zur Herstellung der Organopolysiloxane gemäß Anspruch 1 bis 8, **dadurch gekennzeichnet, daß** man wasserstoffunktionelle Siloxane der allgemeinen Formel 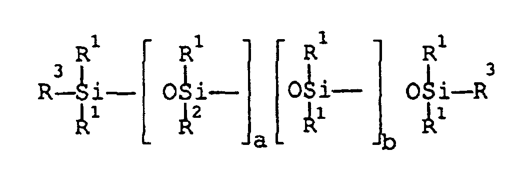 wobei
R¹ = gleiche oder verschiedene aliphatische oder aromatische Kohlenwasserstoffreste sind,
R² = H ist,
R³ = R² oder R¹ ist,
und die übrigen Indices die obengenannte Bedeutung haben,
an Alkandiolmonovinylether der allgemeinen Formel 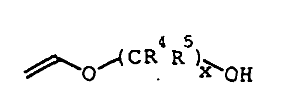 wobei R⁴ und R⁵ gleiche oder verschiedene Reste sein können und jeweils einen H- oder Alkylrest, verzweigt oder unverzweigt, mit bis zu insgesamt 6 C-Atomen bedeuten und x einen Wert von 3 bis 11 hat, wobei -(CR⁴R⁵)- auch ein ringförmiger aliphatischer oder aromatischer Rest sein kann,
in Gegenwart eines an sich bekannten Hydrosilylierungskatalysators (z. B. Platin- oder Rhodiumkatalysator) anlagert und in einer nachfolgenden Reaktionsstufe mit Acrylsäure oder Acrylsäurederivaten verestert.

10. Verwendung der Organopolysiloxane gemäß Anspruch 1 bis 8 als härtbare Bindemittel oder als härtbare, abhäsive Beschichtungsmassen, allein oder in Mischung mit Härtungsinitiatoren, Füllstoffen, Pigmenten, anderen an sich bekannten Acrylatsystemen und/oder weiteren üblichen Zusatzstoffen.

## Claims

1. An organopolysiloxane of the general formula 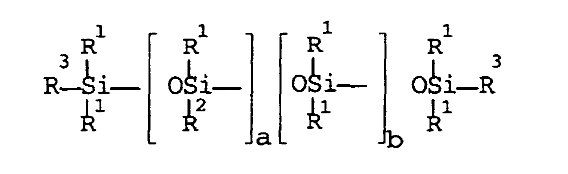 where
R^{1 =} identical or different aliphatic or aromatichydrocarbon radicals,
R² = CH₂CH₂O(CR⁴R⁵)xOC(O)CR⁶=CHR⁷, where
R⁴, R5⁵, R⁶ and R⁷
can be identical or different radicals and are each a H or alkyl radical, branched or unbranched, having up to a total of 6 C atoms and x has a value from 3 to 11, where -(CR⁴R⁵)- can also be a cyclic aliphatic or aromatic radical,
R³ = R² or R¹,
a = 0 to 50 and
b = 0 to 500,
but at least one radical R² is attached terminally and/or laterally.

2. An organopolysiloxane as claimed in claim 1, wherein a = 0 to 30.

3. An organopolysiloxane as claimed in claim 1, wherein b = 0 to 400.

4. An organopolysiloxane as claimed in claim 1, wherein b = 0 to 250.

5. An organopolysiloxane according to claim 1, wherein R¹ is a methyl radical.

6. An organopolysiloxane according to claim 1, wherein R⁴ = R⁵ = R⁶ = R⁷ = hydrogen.

7. An organopolysiloxane according to claim 1, wherein x = 3 to 6.

8. An organopolysiloxane according to claim 1, wherein x = 4.

9. A process for preparing an organopolysiloxane as claimed in any of claims 1 to 8, which comprises subjecting hydrogen-functional siloxanes of the general formula 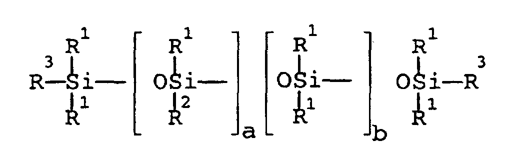 where
R¹ = identical or different aliphatic or aromatic hydrocarbon radicals,
R²= H,
R³= R² or R¹,
and the other indices are as defined above,
to an addition reaction with alkanediol monovinyl ethers of the general formula 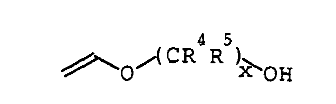 where R⁴ and R⁵ can be identical or different radicals and are each a H or alkyl radical, branched or unbranched, having up to a total of 6 C atoms and x has a value from 3 to 11, where -(CR⁴R⁵)- can also be a cyclic aliphatic or aromatic radical,
in the presence of a hydrosilylation catalyst which is known per se (for example a platinum or rhodium catalyst) and, in a subsequent reaction stage, esterifying the adduct with acrylic acid or acrylic acid derivatives.

10. The use of an organopolysiloxane as claimed in any of claims 1 to 8 as a curable binder or as a curable, abhesive coating composition, alone or mixed with curing initiators, fillers, pigments, other acrylate systems which are known per se, and/or further customary additives.

## Revendications

1. Organopolysiloxanes répondant à la formule générale : 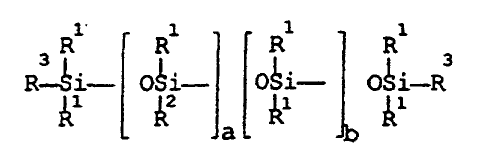 dans laquelle
R¹ = radicaux hydrocarbonés aliphatiques ou aromatiques, identiques ou différents,
R² = CH₂CH₂O(CR⁴R⁵)ₓOC(O)CR⁶=CHR⁷,
R⁴, R⁵, R⁶ et R⁷ pouvant être
des radicaux identiques ou différents et représentant à chaque fois un atome d'hydrogène ou un radical alkyle, ramifié ou non ramifié, comportant au total jusqu'à 6 atomes de C et x ayant une valeur de 3 à 11, -(CR⁴R⁵)- pouvant aussi être un radical cyclique aliphatique ou aromatique,
R³ = R² ou R¹,
a = 0 à 50 et
b = 0 à 500,
au moins un radical R² étant cependant fixé en extrémité et/ou latéralement.

2. Organopolysiloxanes selon la revendication 1, dans lesquels a = 0 à 30.

3. Organopolysiloxanes selon la revendication 1, dans lesquels b = 0 à 400.

4. Organopolysiloxanes selon la revendication 1, dans lesquels b = 0 à 250.

5. Organopolysiloxanes selon la revendication 1, dans lesquels R¹ est un radical méthyle.

6. Organopolysiloxanes selon la revendication 1, dans lesquels R⁴ = R⁵ = R⁶ = R⁷ = hydrogène.

7. Organopolysiloxanes selon la revendication 1, dans lesquels x = 3 à 6.

8. Organopolysiloxanes selon la revendication 1, dans lesquels x = 4.

9. Procédé de préparation des organopolysiloxanes selon les revendications 1 à 8, **caractérisé en ce que** l'on fixe, par addition, des siloxanes à fonctionnalité hydrogène, répondant à la formule générale : 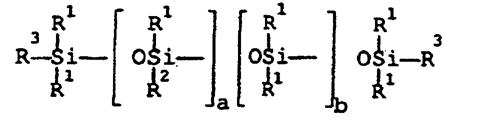 dans laquelle
R¹ = radicaux hydrocarbonés aliphatiques ou aromatiques, identiques ou différents,
R² = H,
R³ = R² ou R¹,
et les autres indices ont les significations ci-dessus, à un monovinyléther d'alcanediol répondant à la formule générale 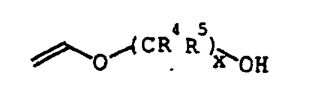 dans laquelle R⁴ et R⁵ peuvent être des radicaux identiques ou différents et représentent à chaque fois un atome d'hydrogène ou un radical alkyle, ramifié ou non ramifié, comportant au total jusqu'à 6 atomes de C et x a une valeur de 3 à 11, -(CR⁴R⁵)- pouvant aussi être un radical cyclique aliphatique ou aromatique, en présence d'un catalyseur d'hydrosilylation connu (par exemple catalyseur au platine ou au rhodium) et qu'on estérifie dans une étape de réaction suivante avec de l'acide acrylique ou des dérivés de l'acide acrylique.

10. Utilisation des organopolysiloxanes selon les revendications 1 à 8 comme liants durcissables ou comme masses de revêtement adhésives, durcissables, seuls ou en mélange avec des initiateurs de durcissement, des charges, des pigments, d'autres systèmes à base d'acrylates et/ou d'autres additifs courants.
